# EUROPEAN PATENT APPLICATION

(11) **EP 4 546 032 A1**
(43) Date of publication of application: **30.04.2025**
(21) Application number: 23845532.3
(22) Date of filing: 25.07.2023
(51) Int. Cl.: G02B 27/01, B60K 35/00

(54) **DISPLAY APPARATUS, IMAGE SOURCE APPARATUS, TRAFFIC DEVICE AND DISPLAY METHOD**

(30) Priority: 28.07.2022 CN 202210901853; 28.07.2022 CN 202221975965 U
(71) Applicant: Futurus Technology Co., Ltd., Beijing 101102 (CN)
(72) Inventor: WU, Huijun, Beijing 101102 (CN); XU, Junfeng, Beijing 101102 (CN)
(74) Representative: FDST Patentanwälte
(86) International application number: PCT/CN2023/109064
(87) International publication number: WO 2024/022322

(57) **Abstract**

A display apparatus, an image source apparatus, a traffic device and a display method. The display apparatus is configured to enable a user to view a virtual image by means of an eye box area of the display apparatus, the virtual image at least comprising a left virtual image portion (L) and/or a right virtual image portion (R). The display apparatus can improve the fusion effect of virtual images and objects in the environment.

## Description

### CROSS-REFERENCE TO RELATED APPLICATION

The patent application claims the priority of the Chinese patent applications No. 202210901853.7 and No. 202221975965.9 that are filed on July 28, 2022, the entire disclosure of which are incorporated herein by reference as part of the present application.

### TECHNICAL FIELD

Embodiments of the present disclosure relate to a display apparatus, an image source apparatus, a traffic device and a display method.

### BACKGROUND

Head up display (HUD) apparatus is also called eye-level display apparatus. By finally projecting the light beams emitted from the image source of the HUD onto an imaging window (a rear-mounted imaging board or the windshield of a vehicle, etc.), the user can directly see the virtual image of the HUD without having to look down, thus improving the user experience. For example, in some cases, the HUD can prevent the user from being distracted by looking down at the dashboard during driving, thus improving driving safety and providing a better driving experience.

In the Background, the disclosed information is only used for enhancing the understanding of the background of this application, so it may include existing technical information that does not constitute knowledge to those of ordinary skill in the art.

### SUMMARY

The present disclosure at least provides a display apparatus, an image source apparatus, a traffic device and a display method.

In a first aspect, at least one embodiment of the present disclosure provides a display apparatus, the display apparatus is configured to enable a user to observe a virtual image through an eyebox region of the display apparatus, and the virtual image at least includes a left virtual image portion and/or a right virtual image portion.

For example, the image surface of the left virtual image portion and/or the right virtual image portion can be a plane or a curved surface.

In a second aspect, at least one embodiment of the present disclosure provides a display apparatus, the display apparatus is configured to enable a user to observe a virtual image through an eyebox region of the display apparatus, the virtual image at least includes a first virtual image portion and a second virtual image portion with intersected image surface extension directions, and the first virtual image portion and the second virtual image portion are connected.

In a third aspect, at least one embodiment of the present disclosure provides a display apparatus, the display apparatus is configured to enable a user to observe a virtual image through an eyebox region of the display apparatus, the virtual image at least includes a first virtual image portion and a second virtual image portion with intersected image surface extension directions, and light beams for forming the first virtual image portion and light beams for forming the second virtual image portion come from a same image source display included in the display apparatus.

In a fourth aspect, at least one embodiment of the present disclosure provides an image source apparatus, the image source apparatus is an image source apparatus applied to the display apparatus according to any one of the first to third aspects of the present disclosure, and the image source apparatus includes the image source assembly and the refracting member; or, the image source apparatus is an image source apparatus applied to the display apparatus according to any one of the first to third aspects of the present disclosure, and the image source apparatus includes the curved image source display.

In a fifth aspect, at least one embodiment of the present disclosure provides a traffic device, which includes the display apparatus as described in any embodiment of the first aspect, the second aspect, and the third aspect or the image source apparatus as described in the fourth aspect.

In a sixth aspect, at least one embodiment of the present disclosure provides a display method, which includes: projecting imaging light beams to an imaging window of a display apparatus, so that a user can observe a virtual image in a field of view through an eyebox region of the display apparatus. The virtual image at least includes a left virtual image portion and/or a right virtual image portion; and/or, the virtual image at least includes a first virtual image portion and a second virtual image portion with intersected image surface extension directions, and the first virtual image portion and the second virtual image portion are connected.

For example, the display method can be applied to the display apparatus according to any one of the first to third aspects of the present application, and correspondingly, the related descriptions of the display apparatuses provided in the first to third aspects of the present disclosure are also applicable to the display method provided in the present disclosure.

It should be understood that both the above general description and the following detailed description are exemplary only and are not restrictive of the present application.

### BRIEF DESCRIPTION OF DRAWINGS

In order to more clearly illustrate the technical solution of the embodiments of the present disclosure or the technical solution in an existing art, the drawings of the embodiments and the drawings in the existing art will be briefly described in the following. Apparently, the described drawings in the following are only related to some embodiments of the present application. For those skilled in the art, other drawings can be obtained according to these drawings without creative work.
Fig. 1 shows a schematic diagram of positions of a reference virtual image and a virtual image continuously zoomed along a column direction;
Fig. 2 shows a schematic diagram of continuous virtual images of different combinations;
Fig. 3(a)- Fig. 3(j) respectively show schematic structural diagrams of surface types imaged by a display apparatus according to exemplary embodiments of the present application;
Fig. 4 shows a schematic structural diagram of a display apparatus according to some embodiments of the present application;
Fig. 5 shows a schematic structural diagram of a display apparatus according to another embodiment of the present application;

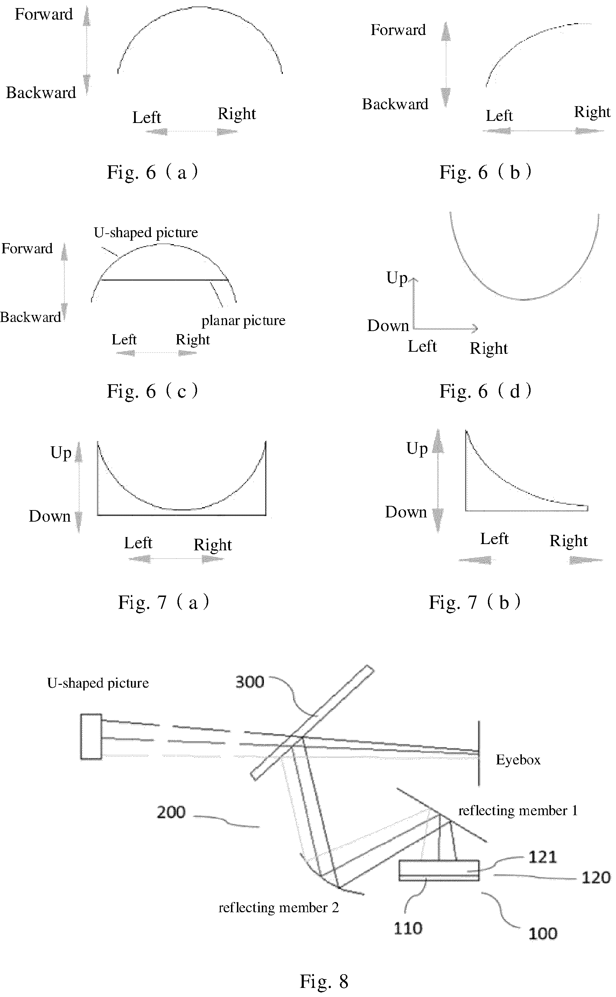

Fig. 6(a) shows a schematic structural diagram of a backward concave U-shaped virtual image according to an embodiment of the present application; Fig. 6(b) shows a schematic structural diagram of a single left virtual image according to an embodiment of the present application; Fig. 6(c) shows a schematic structural diagram of a backward concave U-shaped virtual image in comparison with a planar virtual image according to an embodiment of the present application; Fig. 6(d) shows a schematic structural diagram of a forward convex U-shaped virtual image according to an embodiment of the present application;
Fig. 7(a) shows a schematic structural diagram of a U-shaped glass brick according to some embodiments of the present application;
Fig. 7(b) shows a schematic structural diagram of a U-shaped glass brick according to another embodiment of the present application;
Fig. 8 shows a schematic structural diagram of a display apparatus according to another embodiment of the present application;
Fig. 9 shows a schematic structural diagram of a display apparatus according to another embodiment of the present application;
Fig. 10(a) shows a schematic structural diagram of a curved image source according to some embodiments of the present application;
Fig. 10(b) shows a schematic structural diagram of a curved image source according to another embodiment of the present application;
Fig. 11 shows a schematic structural diagram of a display apparatus according to an embodiment of the third aspect of the present application;
Fig. 12- Fig. 18 show schematic structural diagrams of a display apparatus according to another embodiment of the present application;
Fig. 19 shows a schematic structural diagram of a transparent light-gathering portion according to some embodiments of the present application;
Fig. 20 shows a schematic structural diagram of a transparent light-gathering portion according to another embodiment of the present application; and
Fig. 21 shows a schematic structural diagram of a display apparatus according to another embodiment of the present application.

### DETAILED DESCRIPTION

Now, exemplary embodiments will be described more thoroughly with reference to the accompanying drawings. However, the exemplary embodiments may be implemented in various forms and should not be construed as limited to the embodiments set forth herein; rather, these embodiments are provided to explain the present application thoroughly and completely, and fully convey the inventive concept of the exemplary embodiments to those skilled in the art. In the drawings, the same or similar parts are represented by the same reference numerals, therefore repeated descriptions thereof will be omitted.

The features, structures, or characteristics described herein may be combined in any suitable manner in one or more embodiments. In the following description, numerous specific details are provided to give a thorough understanding on the embodiments of the present application. However, those skilled in the art can readily appreciate that the technical solution of the present application can be practiced without one or more of those specific details, or in other ways, or with other components, materials, devices or operations. In these cases, well-known structures, methods, devices, implementations, materials or operations will not be shown or described in detail.

The flowcharts shown in the drawings are only illustrative, and do not necessarily include all contents and operations/steps, nor do they have to be executed in the described order. For example, some operations/steps can be split, while others can be combined or partially combined. Therefore, the actual order of execution may vary according to the actual situation.

The terms "first", "second" and the like in the description, claims and accompanying drawings of the present application are intended to distinguish different objects, rather than to describe a specific order of the objects. In addition, the terms "comprise", "include" and "have" and any variants thereof are intended to cover non-exclusive inclusion. For example, a process, method, system, product or apparatus including a series of steps or units is not limited to the listed steps or units, but optionally further includes steps or units that are not listed, or optionally further includes other steps or units inherent to the process, method, product or apparatus.

The following description provides many different embodiments or examples for implementing different structures of the present disclosure. In order to simplify the disclosure of the present application, components and arrangements of specific examples are described below. Of course, they are merely examples and are not intended to limit the present disclosure. In addition, the present disclosure may repeat reference numerals and/or reference letters in different examples, which are for the purpose of simplicity and clarity, and do not indicate the relationship between the various embodiments and/or arrangements discussed. In addition, the present disclosure provides examples of various specific processes and materials, but one of ordinary skill in the art will recognize the use of other processes and/or the use of other materials.

Head up display (HUD) uses a reflective optical design to finally project the light beams emitted from the image source to the imaging window (imaging board or windshield, etc.) and to project the image light beams to the eyebox region through the imaging window, so that the user can directly see the virtual image through the eyebox region without having to look down. For example, the HUD can prevent the user from being distracted by looking down at the dashboard during driving, improve driving safety and provide a better driving experience.

For example, taking a HUD based on reflection imaging by a planar mirror and a curved mirror as an example, the light beams emitted from the image source of the HUD are reflected by the planar mirror and the curved mirror in turn and then exit, and the exited light beams can be reflected on the transparent imaging window and remain on one side of the cockpit, so as to enter the user's eyes. For example, these light beams entering the user's eyes enable the user to see a virtual image presented by the virtual image displayed on the HUD image source on the other side of the transparent imaging window. At the same time, because the imaging window itself is transparent, the ambient light beams on the other side of the imaging window can still be transmitted to the user's eyes through it, so that the HUD imaging can be seen by the user without affecting the user's observation of the road conditions outside the car during driving.

The inventors of the present application have noticed in research that the actual road conditions observed by the user through the transparent imaging window are three-dimensional when the user is driving normally, while the traditional HUD generally forms a vertical or nearly vertical virtual image, and the user will have problems such as visual error (left and right eyes) and/or visual convergence (conflict between the front and rear brain-eye distances), etc., during the observation process, which makes the user prone to fatigue, nausea and other adverse physical conditions. For example, the reason for the visual convergence is as follows: when the Augmented Reality (AR) content is not aligned with the environmental object, there will be a deviation between the real physical distance when the eyes watch the AR content and the perceived distance of the AR content perceived by the brain; when this deviation is large, the user may feel uncomfortable. In addition, because the picture of the virtual image is generally do not fit well with the external object, it will be difficult to continuously provide the user with stable and reliable indication effect during driving.

In order to solve at least one of the above technical problems, the present application provides a display apparatus, an image source apparatus, a traffic device and a display method, so as to improve the fusion effect of the virtual image and the environmental object, thus, for example, improving the problem of visual convergence. For example, the embodiment of the present disclosure can make it easier for position matching between the AR content and the environmental object (the matching refers to the alignment of the AR content and the environmental object, which can mean that the positions of them are coincident, or the distance therebetween can be relatively close, and the distance is close enough to meet the usage requirements). For example, in some embodiments, the HUD provides at least one virtual image, and part or entire of a virtual image of at least one of the at least one virtual image is continuously zoomed. For example, at least one of the left virtual image portion and the right virtual image portion is a continuously zoomed picture. For example, the imaging distance of part or entire of the continuously zoomed virtual image gradually changes, which can reduce parallax and alleviate the problem of visual convergence; for example, the corresponding AR content can be displayed by adapting to environmental objects at different distances. In some embodiments, by changing the optical path of light beams emitted from at least some regions of the screen in the standard light path, at least some regions on the left and/or right side of the virtual image will have correspondingly changed virtual image distances, thus forming a continuously transitional special-shaped picture and improving the problems such as visual error and/or visual convergence, etc. For example, the virtual image can be a 3D continuously distributed virtual image (hereinafter referred to as a continuous virtual image), and the formed continuous virtual image has a continuously zoomed virtual image on at least one of the left and/or right sides.

What needs to be understood here is the principle of solving parallax and visual convergence by forming a continuously zoomed virtual image: the parallax problem is caused by the positional deviation between the AR content and the corresponding environmental object, so that the position of the virtual image of the AR content seen by either the left eye or the right eye of the user cannot be aligned with the environmental object, resulting in a less realistic display of the AR content.

The display apparatus provided by some embodiments of the present disclosure can be a display apparatus for HUD or a display apparatus for non-HUD.

For example, in the assembly process, a U-shaped virtual image can be formed by means of U-shaped glass or an arc screen, and the U-shaped virtual image fit well with the external object, thus improving the indication effect of the HUD to the user.

The preferred embodiments of the present application will be described below with reference to the accompanying drawings. It should be understood that the preferred embodiments described here are only used to illustrate and explain the present application, and are not used to limit the present application.

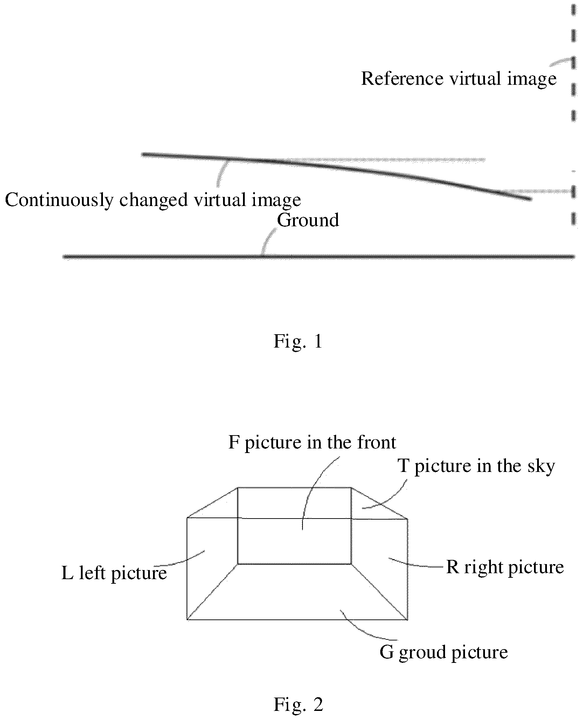

For example, as shown in Fig. 1, a standard light path is selected. It can be understood here that the standard light path can be an imaginary light path, that is, a virtual image is found or imagined to be a virtual image (reference virtual image) perpendicular to the ground for determining the position of a corresponding screen. The continuously zoomed virtual image means that the distances between at least some pixels in at least one column (or row) of the virtual image and the corresponding pixels in the reference virtual image are continuously changed. For example, continuous zooming can be continuous zooming in one of the column direction and the row direction of the virtual image, or can be continuous zooming in a combination of the two directions. Fig. 1 shows a schematic diagram of a reference virtual image and a virtual image continuously zoomed along a column direction

The continuous virtual image formed by imaging can exist in various situations.

As shown in Fig. 2, from the perspective of virtual image, imaging of a continuous virtual image can be divided into a left virtual image portion (L), a right virtual image portion (R), a front lower sub-virtual image portion (ground virtual image portion) (G), a front sub-virtual image portion (F) and a front upper sub-virtual image portion (sky virtual image portion) (T).

The virtual image combination formed by a continuous virtual image can have the following situations:
1. L - single left; R - single right; LR - left and right.
2. LG - left and ground; RG - right and ground.
3. LGR - left and right and ground.
4. LGR+F - left and right and ground, plus front.
5. LGR+F+T - left and right+ground+front+sky.

In addition, according to the usage requirements of the imaging assembly, it can also be configured into LGF, RGF, LGT, RGT or other configurations.

Because the location of the cockpit in different countries may be different, the single-sided virtual image may be applicable in different countries (left or right steering wheel), and the virtual image formed in the single-sided virtual image is continuously transitional.

For example, in some examples, the display apparatus can be configured to enable a user to observe a virtual image formed by the display apparatus in the eyebox region, and the virtual image at least includes a first virtual image portion and a second virtual image portion with intersected image surface extension directions, the first virtual image portion and the second virtual image portion are connected.

It can be understood here that a region where the observer needs to watch the imaging, that is, the eyebox region, can be preset according to actual needs. The eyebox region refers to the region where the observer's eyes are located and the image displayed by the display apparatus can be seen, and can be, for example, a plane region or a three-dimensional region.

For example, the first virtual image portion and the second virtual image portion can be any two groups of virtual images corresponding to the left virtual image portion (L), the right virtual image portion (R), the front lower sub-virtual image portion (G), the front sub-virtual image portion (F) and the front upper sub-virtual image portion (T).

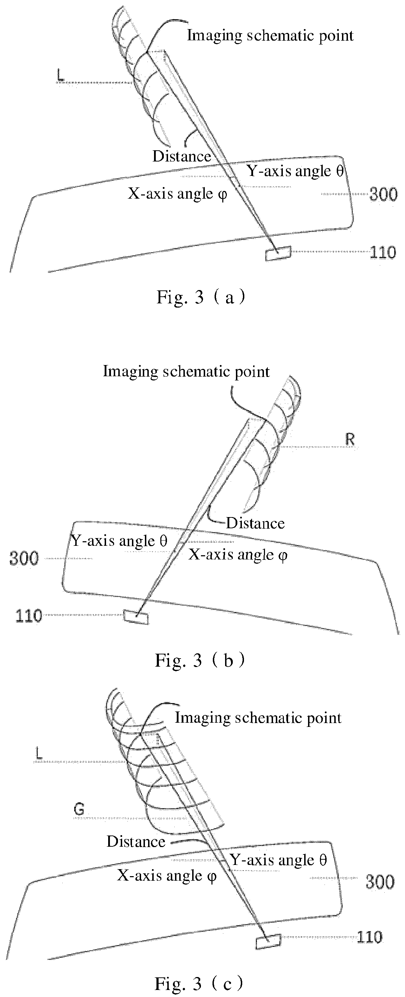

Fig. 3(a)-Fig. 3(j) respectively show schematic structural diagrams of surface types imaged by a display apparatus according to exemplary embodiments of the present application.

Fig. 3(a)-Fig. 3(j) respectively correspond to the imaging states of the display apparatus being L (single left virtual image portion), R (single right virtual image portion), L+G (left virtual image portion plus front lower sub-virtual image portion), L+T (left virtual image portion plus front upper sub-virtual image portion), L+R+G (left and right virtual image portions plus front lower sub-virtual image portion), L+R+F (left and right virtual image portions plus front sub-virtual image portion), L+R+T (left and right virtual image portions plus front upper sub-virtual image portion), L+R+T+G (left and right virtual image portions plus front upper sub-virtual image portion and front lower sub-virtual image portion), L+R+T+G+F (left and right+front lower sub-virtual image portion+front+sky) with a connection portion of virtual images being an arc, and L+R+T+G+F (left and right+ground+front sub-virtual image portion+front upper sub-virtual image portion) with a connection portion of virtual images being a right-angle corner.

Referring to Fig. 3(a)-Fig. 3(j), the display apparatus in the exemplary embodiments is configured to enable the user to observe a virtual image through the eyebox region of the display apparatus. The virtual image at least includes a left virtual image portion (L) and/or a right virtual image portion (R). That is, it corresponds to the left virtual image portion (L) and the right virtual image portion (R) in Fig. 2.

For example, the display apparatus of the present application is a HUD, the HUD further includes an imaging window 300, and the imaging window 300 is configured to reflect incident light beams to the eyebox region.

For example, the head up display system of the present application has a multi-layer imaging system, and at least one layer is provided with a large-scale imaging layer, that is, a HUD with large-scale imaging is provided; and the arrangement of the HUD with large-scale imaging is matched with the visible region of the windshield, so that the image presented by the light beams emitted from the HUD with large-scale imaging can cover the visible region of the windshield; for example, the image presented by the light beams emitted from the HUD with large-scale imaging can cover more than 40% of the area of the windshield, and further, can cover more than 50%, more than 60%, more than 70%, more than 80% or more than 90% of the area of the windshield as needed. Compared with the traditional HUD based on a free-form reflective mirror and with small Field of View (FOV) in the related art, the arrangement of multiple light sources in the HUD with large-scale imaging is matched with the visible region of the windshield, so that the light beams emitted from the HUD with large-scale imaging can present an image covering the visible region of the windshield, achieving the purpose of displaying an image at any position in the visible region of the windshield, thus displaying more abundant contents through the HUD with large-scale imaging and improving the use experience of the HUD.

For example, at least one embodiment of the present disclosure further provides an image source apparatus, the image source apparatus is an image source apparatus applied to the display apparatus, and the image source apparatus includes an image source assembly 100 and a refracting member 121; or the image source apparatus is an image source apparatus applied to the display apparatus, and the image source apparatus includes a curved image source display 110.

For example, at least one embodiment of the present disclosure provides a traffic device, which includes the display apparatus in any embodiment.

For example, at least one embodiment of the present disclosure provides a display method, which includes: projecting imaging light beams to an imaging window of a display apparatus, so that a user can observe a virtual image in a field of vision through an eyebox region of the display apparatus, and the virtual image at least includes a left virtual image portion and/or a right virtual image portion; and/or, the virtual image at least includes a first virtual image portion and a second virtual image portion with intersected image surface extension directions, and the first virtual image portion and the second virtual image portion are connected.

It can be understood here that, for example, in some embodiments, the types of virtual image portions can be divided according to the positions of the virtual image portions relative to the travel route in the user's viewing effect; for example, the virtual image portions can be a left virtual image portion located on the left side of the travel route, a right virtual image portion located on the right side of the travel route, or a front virtual image portion located between the left virtual image portion and the right virtual image portion.

For example, in some embodiments, the virtual image can include a virtual image portion; or, the virtual image can include two virtual image portions, and the extension directions of the image surfaces where the two virtual image portions are located are intersected with each other or are basically parallel to each other; or, the virtual image includes at least three virtual image portions, and the extension directions of the image surfaces where at least some adjacent virtual image portions are located are intersected with each other.

For example, in the case where the virtual image includes only the left virtual image portion (L), the virtual image is a continuous virtual image. That is, in this state, the picture content of the left virtual image portion (L) can be continuous or discontinuous, but the left virtual image portion (L) is imaged as a non-spliced and/or continuously zoomed virtual image as a whole, so that the problems, such as parallax and/or visual convergence, etc., of the user, can be solved by forming a continuously zoomed virtual image when the user observes the left virtual image portion (L).

Similarly, for example, the virtual image can also be configured to include only the right virtual image portion (R), and in this case, the virtual image is also a continuous virtual image. That is, in this state, the picture content of the right virtual image portion (R) can be continuous or discontinuous, but the right virtual image portion (R) is imaged as a non-spliced and continuously zoomed virtual image as a whole, so that the problems, such as parallax and/or visual convergence, etc., of the user, can be solved by forming a continuously zoomed virtual image when the user observes the right virtual image portion (R).

For example, the virtual image can also be configured to include both the left virtual image portion (L) and the right virtual image portion (R), and in this configuration state, the virtual image is also a continuous virtual image. That is, the picture content of the left virtual image portion (L) or the right virtual image portion (R) can be continuous or discontinuous, but the left virtual image portion (L) and the right virtual image portion (R) are imaged as a non-spliced and continuously zoomed virtual image as a whole. Moreover, if the left virtual image portion (L) and the right virtual image portion (R) are connected, the connection portion of them is also a non-spliced and continuously zoomed virtual image.

Further, the virtual image formed by the display apparatus can further include an intermediate virtual image portion, which includes one or more of a front lower sub-virtual image portion (G), a front sub-virtual image portion (F) and a front upper sub-virtual image portion (T). For example, the front lower sub-virtual image portion (G), the front sub-virtual image portion (F) and the front upper sub-virtual image portion (T) respectively display the picture on the ground, the picture in the front and the picture in the sky in sequence.

For example, one or more of the left virtual image portion (L), the right virtual image portion (R), the front lower sub-virtual image portion (G), the front sub-virtual image portion (F) and the front upper sub-virtual image portion (T) may be configured to be perpendicular to the ground or inclined to the ground.

For example, the virtual image is configured such that any adjacent virtual image portions are connected, and the connection portion of the adjacent virtual image portions is a non-spliced and continuously zoomed virtual image. For example, the final continuous virtual image can be configured as a dustpan-shaped virtual image (LGR+F), that is, it includes the left and right virtual images, the front lower sub-virtual image and the front sub-virtual image. In this case, each pair selected from the left virtual image and the front lower sub-virtual image, the left virtual image and the front sub-virtual image, the right virtual image and the front lower sub-virtual image, the right virtual image and the front sub-virtual image are all configured in a connected state, and by forming a non-spliced and continuously zoomed virtual image, the problems, such as parallax and/or visual convergence, etc., of the user, can be effectively solved. Compared with the U-shaped virtual image (LGR or LFR), the dustpan-shaped virtual image (LGR+F) can achieve ground fitting and both-sided fitting, and form display that does not affect the picture in the distance ahead.

It can be understood that in the configuration process, the front lower sub-virtual image portion (G), the front sub-virtual image portion (F) and the front upper sub-virtual image portion (T) can be flexibly selected in the final virtual image according to needs. In the finally configured virtual image, if the intermediate virtual image portion includes more than one of the front lower sub-virtual image portion (G), the front sub-virtual image portion (F) and the front upper sub-virtual image portion (T), the adjacent virtual image portions in the intermediate virtual image portion are at least partially connected. For example, if the intermediate virtual image portion includes the front lower sub-virtual image portion (G) and the front sub-virtual image portion (F), at least part of the connection portion of the front lower sub-virtual image portion (G) and the front sub-virtual image portion (F) is a non-spliced and continuously zoomed virtual image. Optionally, adjacent sub-virtual image portions in the intermediate virtual image portion are completely connected to obtain better effects of preventing parallax and visual convergence.

In some embodiments, the display apparatus can be configured to include an image source assembly with an image source display, the image source display includes a first display region and a second display region, image light beams emitted from the first display region correspond to the left virtual image portion (L) and/or the right virtual image portion (R), and image light beams emitted from the second display region correspond to the remaining portions of the virtual image. For example, the first display region and the second display region are disposed on the same image source display. That is, the light beams used to form the first virtual image portion and the second virtual image portion come from the same image source display of the display apparatus.

In the specific configuration process of the display apparatus, the user can observe the virtual image formed by the display apparatus in the eyebox region through the following methods, and the virtual image at least includes the left virtual image portion (L) and/or the right virtual image portion (R).
1. A refracting member is disposed on the imaging path of the image source display, and the refracting member is configured to refract image light beams emitted from the image source display and incident on the refracting member, so that the final virtual image imaged on the imaging window is continuously transitional.
2. The image source display is configured as a curved image source display, so that the image light beams generated by the image source display are image light beams that can form a continuously transitional special-shaped image initially. For example, the image source display can be a special-shaped screen, a special-shaped projection screen, a special-shaped LED screen, a special-shaped Organic Light-Emitting Diode (OLED) screen, a special-shaped LCD screen or the like.

In the display apparatus provided by at least one embodiment of the present disclosure, by setting a special-shaped picture with at least one of left side and right side, both sides can display virtual images matched with both sides of the road in the real world. Therefore, it can improve the use experience of the user, improve the fit between the light field picture and the external object, and improve the indication effect.

In the embodiment of the present disclosure, special shape refers to irregular shape. For example, regular shape includes: rectangle, circle, triangle, parallelogram and regular polygon. For example, special shape includes U-shape, L-shape and dustpan-shape, but is not limited thereto.

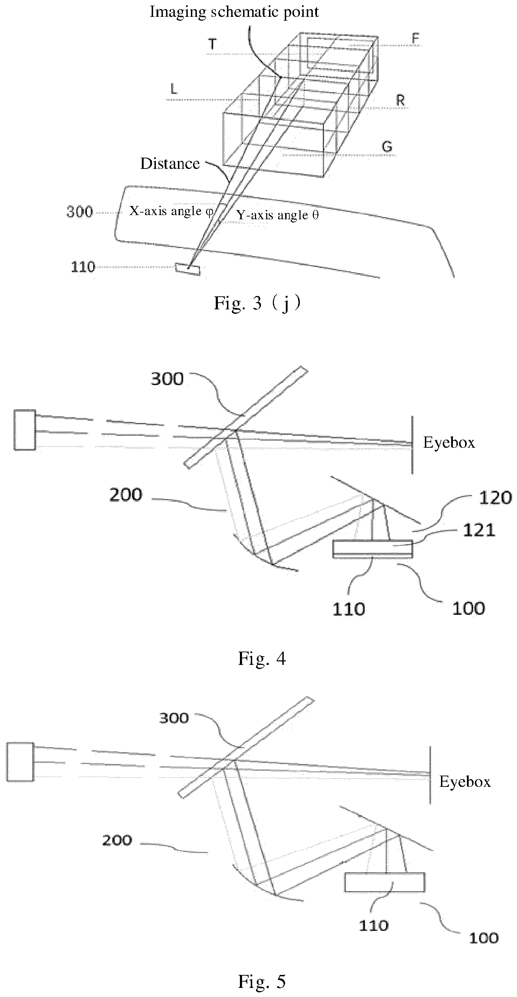

Fig. 4 shows a schematic structural diagram of a display apparatus according to some embodiments of the present application.

As shown in Fig. 4, the display apparatus of some embodiments includes an image source assembly 100 and a magnifying assembly 200.

As shown in Fig. 4, the image source assembly 100 includes an image source display 110 and a light-adjusting portion 120, and the light-adjusting portion 120 includes a refracting member 121, and the image source assembly 100 emits first image light beams.

As shown in Fig. 4, the magnifying assembly 200 is disposed on the imaging path of the image source assembly 100, and the first image light beams emitted from the image source assembly 100 are formed into second image light beams after passing through the magnifying assembly 200. That is, the magnifying assembly 200 is configured to magnify incident image light beams to obtain magnified light beams for forming at least part of a virtual image.

As shown in Fig. 4, the second image light beams are reflected by the imaging window 300 and form a continuous virtual image in the eyebox region, and the continuous virtual image includes at least one of the left virtual image portion (L) and the right virtual image portion (R).

The display apparatus in the embodiment of the second aspect is the same as the display apparatus in the embodiment of the first aspect in that the final continuous virtual image can be configured to include a left virtual image portion (L) and/or a right virtual image portion (R), and further, the formed continuous virtual image can further include one or more of a front lower sub-virtual image portion (G), a front sub-virtual image portion (F) and a front upper sub-virtual image portion (T). In the continuous virtual image, the connection portion of adjacent virtual images is a non-spliced and continuously zoomed virtual image.

Taking that the entire special-shaped virtual image finally imaged is a U-shaped virtual image (also can be imaged as a dustpan-shaped virtual image or a virtual image with other shapes) as an example, a U-shaped refracting member (e.g., a U-shaped glass brick) is disposed on the imaging path of the image source assembly 100, and the U-shaped refracting member can add an optical path to the light beams passing through it. In this case, for this part of light beams, the equivalent object distance will change, and the imaging distance will also change accordingly, and finally the U-shaped virtual image will be realized.

That is, in the imaging process, the real object distance has not been changed. However, by arranging the U-shaped refracting member on the imaging path of the image source assembly 100, the optically equivalent distance between the object and the optical device is changed, so the equivalent object distance of the first image light beams generated by the image source assembly 100 is also changed.

For example, after the U-shaped glass brick is provided, the light beams emitted from the image source display 110 are refracted by the U-shaped glass brick and then exit from the U-shaped glass brick. By arranging the U-shaped glass brick, the position of the virtual image generated by the image source assembly 100 is changed, that is, after adding the U-shaped glass brick, the object distance of the image source assembly 100 is changed, and correspondingly, the virtual image finally imaged from a virtual image imaged by the imaging window 300 will also become U-shaped. In the case of the same refractive index, the thicker a portion of the glass brick, the closer the virtual image formed by the portion is to the human eyes.

In the same way, a special-shaped glass brick can realize the presentation of a dustpan-shaped picture.

For example, the refracting member 121 is associated with the image surface shape of the finally formed virtual image. By changing the selection of the refracting member 121, the entire continuous virtual image reflected from the virtual image imaged on the imaging window 300 to the human eyes can finally be a U-shaped virtual image, a dustpan-shaped virtual image or a virtual image with any other desired shape, which is not specifically limited by the present application here. For example, the surface shape of at least part of the light-exiting surface of the refracting member 121 matches the image surface shape of at least part of the virtual image finally formed. For example, matching means that the surface shapes are the same or similar.

Optionally, the magnifying assembly 200 can be a curved mirror, a convex lens, a diffractive waveguide, a geometric waveguide, a Holographic Optical Element (HOE) windshield, etc.

Optionally, the magnifying assembly 200 is a concave mirror; in this case, the surface of the concave mirror close to the display region is a concave surface. The arrangement of the curved mirror can enlarge the imaging size of the image picture, so that the display apparatus has a longer imaging distance and a larger imaging size, and the curved mirror can also cooperate with the imaging window 300 (e.g., windshield) to eliminate the virtual image distortion caused by the imaging window 300.

Fig. 5 shows a schematic structural diagram of a display apparatus according to another embodiment of the present application.

As shown in Fig. 5, another display apparatus includes an image source assembly 100 and a magnifying assembly 200.

As shown in Fig. 5, the image source assembly 100 includes a curved image source display 110, and the image source assembly 100 emits first image light beams.

As shown in Fig. 5, the magnifying assembly 200 is disposed on the imaging path of the image source assembly 100, and the first image light beams emitted from the image source assembly 100 are formed into second image light beams after passing through the magnifying assembly 200.

For example, the second image light beams are reflected by the imaging window 300 and form a continuous virtual image in the eyebox region, and the continuous virtual image includes at least one of the left virtual image portion (L) and the right virtual image portion (R).

The display apparatus in the embodiment of the third aspect is the same as the display apparatus in the embodiment of the first aspect in that the final continuous virtual image can be configured to include a left virtual image portion (L) and/or a right virtual image portion (R), and further, the formed continuous virtual image can further include one or more of a front lower sub-virtual image portion (G), a front sub-virtual image portion (F) and a front upper sub-virtual image portion (T). In the continuous virtual image, the connection portion of adjacent virtual images is a non-spliced and continuously zoomed virtual image.

Taking that the entire special-shaped virtual image finally imaged is a U-shaped virtual image (also can be imaged as a dustpan-shaped virtual image or a virtual image with other shapes) as an example, the curved image source display 110 is an OLED screen, and the light-exiting surface of the OLED screen is a U-shaped arc surface, so as to finally form a U-shaped virtual image. The curved image source display 110 includes a display region, the display region is arranged on the light-exiting surface of the OLED screen. The first image light beams emitted from the display region of the curved image source display 110 are reflected by the magnifying assembly 200 to form second image light beams, and the second image light beams are reflected by the imaging window 300 to form a U-shaped virtual image in the eyebox region.

For example, the surface type of the curved image source display 110 is associated with or matched with the image surface shape of at least part of the virtual image finally formed. By changing the selection of the curved image source display 110, the shape of the entire continuous virtual image reflected from the virtual image imaged on the imaging window 300 to the human eyes can be changed, so that the final continuous virtual image thereof can be a U-shaped virtual image, a dustpan-shaped virtual image or a virtual image with any other desired shape. For example, matching means that the surface shapes are the same or similar.

Optionally, the magnifying assembly 200 can be a curved mirror, a convex lens, a diffractive waveguide, a geometric waveguide, a Holographic Optical Element (HOE) windshield, etc.

Optionally, the magnifying assembly 200 is a concave mirror; in this case, the surface of the concave mirror close to the display region is a concave surface. The arrangement of the curved mirror can enlarge the imaging size of the image picture, so that the display apparatus has a longer imaging distance and a larger imaging size, and the curved mirror can also cooperate with the imaging window 300 (e.g., windshield) to eliminate the virtual image distortion caused by the imaging window 300.

Fig. 6(a) shows a schematic structural diagram of a backward concave U-shaped virtual image according to an embodiment of the present application; Fig. 6(b) shows a schematic structural diagram of a single left virtual image according to an embodiment of the present application; Fig. 6(c) shows a schematic structural diagram of a backward concave U-shaped virtual image and a planar virtual image according to an embodiment of the present application; Fig. 6(d) shows a schematic structural diagram of a forward convex U-shaped virtual image according to an embodiment of the present application.

Referring to Fig. 6(a)-Fig. 6(d), in the continuous virtual image formed by the display apparatus of any embodiment of the first, second and third aspects of the present application, corresponding positions of image light beams incident on a same contour line of the refracting member on the virtual image are on a same circumference of a polar coordinate system, a set reference point is taken as an origin of the polar coordinate system. In terms of the left virtual image portion (L) and/or the right virtual image portion (R) in the continuous virtual image, the part of the virtual image corresponding to the position with a larger polar coordinate angle among different positions of the virtual image is closer to the eyebox region.

Because the imaging distance of the virtual image in the present embodiment can change gradually in the polar coordinate system, the AR content can be displayed at an appropriate size at a distance that matches the environmental object, so that the AR content and the environmental object can be aligned or overlapped, thus solving the problems of parallax and visual convergence, and realizing the gradual change of the point of interest (POI) from far to near.

The display apparatus provided by some embodiments of the present disclosure creates, to the best, a 3D continuously distributed picture (hereinafter referred to as a special-shaped picture) in the external space of the automobile, and the picture at least includes one of the left and right pictures. It should be understood that in order to fit the objects in the external three-dimensional continuous space, the picture must also be three-dimensional and continuous, especially in order to fit the POIs such as buildings on both sides of the road, the vertical picture of the traditional HUD is difficult to achieve this function. Because of the principle of AR, in space, a three-dimensional virtual picture is needed to match the real three-dimensional world, so as to realize AR in the true sense. The display apparatus provided by some embodiments of the present disclosure improves the inclined picture or tiled picture, and improves the fusion effect of POIs on the left and right sides of the road. The display apparatus provided by some embodiments of the present disclosure has obvious advantages when applied to products with large FOV.

If there is an intermediate virtual image portion in the continuous virtual image formed by the display apparatus of any embodiment of the first, second and third aspects of the present application, and the intermediate virtual image portion includes a front lower sub-virtual image portion (G) and/or a front upper sub-virtual image portion (T), the part of the virtual image corresponding to the position with a larger downward viewing angle or upward viewing angle among different positions of the virtual image is closer to the eyebox region.

In this setting state, in the process of driving the vehicle by the user, for example, in the process of using the display apparatus of any embodiment of the first, second and third aspects of the present application for assisted driving by the user, it can appear that the middle of the road is far away, both sides of the road is near, and an object in the nearby seems big while an object in the distance seems small, and therefore, it can better fit the objects in the external environment, effectively solve the problems, such as parallax and visual convergence, etc., of the user, and relieve the driving fatigue of the user.

For example, in the continuous virtual image formed by the display apparatus of any embodiment of the first, second and third aspects, the image surface shape of the left virtual image portion and/or the right virtual image portion is curved, and by imaging as a curved virtual image, it can better fit the features of the POIs on both sides of the road, thus effectively solving the problems, such as parallax and/or visual convergence, etc., of the user.

It can be understood here that in a geographic information system, a POI can be a house, a shop, a mailbox or a bus station, etc.

For example, the continuous virtual image formed by the display apparatus of any embodiment of the first, second and third aspects has a front lower sub-virtual image portion (ground virtual image portion) (G), which is formed as, for example, a virtual image tiled onto (parallel or approximately parallel to the ground) or inclined (high in the distance and low in the nearby) to the ground, and has at least one virtual image portion on the left and/or right sides, and the greater the angle, the closer the virtual image distance is. Combined with the ground virtual image portion, the problem of displaying a picture on the ground can be solved. For example, the connection portion of the virtual image can be a right-angle corner connection or an arc/rounded corner connection.

For example, the continuous virtual image formed by the display apparatus of any embodiment of the first, second and third aspects at least includes one virtual image that meets the following requirements, so that in this virtual image, more than one edge virtual image is relatively close while the center of the virtual image is relatively far away, and for example, it can be a U-shaped virtual image. For example, the U-shaped virtual image can refer to a U-shaped one that is forward convex or backward concave from left to right, that is, a virtual image with left, front and right portions, as shown in Fig. 6(a). Or, the U-shaped virtual image can be a virtual image with left, ground and right portions, as shown in Fig. 6(d). Or, the U-shaped virtual image can be a virtual image with left, sky and right portions.

Further, optionally, the continuous virtual image can be a dustpan-shaped virtual image, that is, a virtual image portion is added on the basis of the U-shaped virtual image shape, and for example, it can be a virtual image with left, front, right and ground portions. Further, the continuous virtual image can be a virtual image with a virtual image portion added on the basis of the dustpan-shaped virtual image, and for example, it can be a virtual image with left, front, right, ground and sky portions. For example, the virtual images mentioned above can be arranged obliquely. Of course, the U-shaped virtual image can also be inclined forward or backward.

Further, for example, like a dustpan, the U-shaped virtual image can be formed as a virtual image with the middle protruding forward, both sides extending backward, having a certain height in the upward or downward direction, and the upper end and/or the lower end extending backward. That is, the front, left, right, bottom and/or top of the dustpan-shaped virtual image can be configured to have virtual images.

For example, the U-shaped virtual image portion includes a left virtual image portion and a right virtual image portion, and the U-shaped virtual image portion further includes one of a front lower sub-virtual image portion, a front sub-virtual image portion and a front upper sub-virtual image portion.

It can be understood that the continuous virtual image formed by the display apparatus of any embodiment of the first, second and third aspects can also be configured to have an L-shaped virtual image portion, that is, can be formed as an L-shaped virtual image. The L-shaped virtual image portion includes a left virtual image portion or a right virtual image portion, and the L-shaped virtual image portion further includes one of a front lower sub-virtual image portion, a front sub-virtual image portion and a front upper sub-virtual image portion.

For example, one or more of the left virtual image portion, the right virtual image portion, the front lower sub-virtual image portion, the front sub-virtual image portion and the front upper sub-virtual image portion are perpendicular to or inclined to the ground, or the front lower sub-virtual image portion is tiled onto or parallel to the ground.

In some scene application examples of the display apparatus of any embodiment of the first, second and third aspects, the virtual image displayed by the left virtual image portion includes information related to the left external POI located on the left side of the travel route, and/or the virtual image displayed by the right virtual image portion includes information related to the right external POI located on the right side of the travel route. Similarly, the front lower sub-virtual image portion (G), the front sub-virtual image portion (F) and the front upper sub-virtual image portion (T) can also be configured such that the displayed virtual image include information related to the corresponding POIs.

For example, the virtual image formed by the display apparatus can be adjusted by configuration, so that the Point of Interest (POI) can be displayed on the continuous virtual images on both sides, which is fused with the feature objects on both sides of the real road and includes buildings, parking lots, bus stations, traffic signs, etc.; or, a navigation guidance user interface (UI) is displayed on the continuous virtual images on both sides, which is fused with the real road intersections and includes crossroads, entries and exits of the main and auxiliary roads/ramps, etc.; or, a blind spot prompting UI is displayed on the continuous virtual images on both sides, which is fused with the obstacles (automobiles, bicycles, pedestrians, etc.) coming from the blind spots on both sides of the vehicle on the real road; or, a navigation guidance UI is displayed on the continuous virtual image on the ground, which is fused with the displayed road surface to provide guidance for lane changing and overtaking.

For example, the conventional multi-layer picture cannot accurately match the objects on both sides of the real road because of the discontinuous distance. In the case where there are obstacles, such as trees, traffic signs, street lamps, etc., or walls (tunnels) on both sides of the road and both sides of the FOV, when the virtual image picture presenting POI or other related UI is more distant than the physical object (the picture penetrates into the physical object), it will cause visual convergence, cause dizziness and affect the experience; the continuous picture on the left and/or right sides can solve the above problems and present the corresponding UI at the virtual image distance matching display.

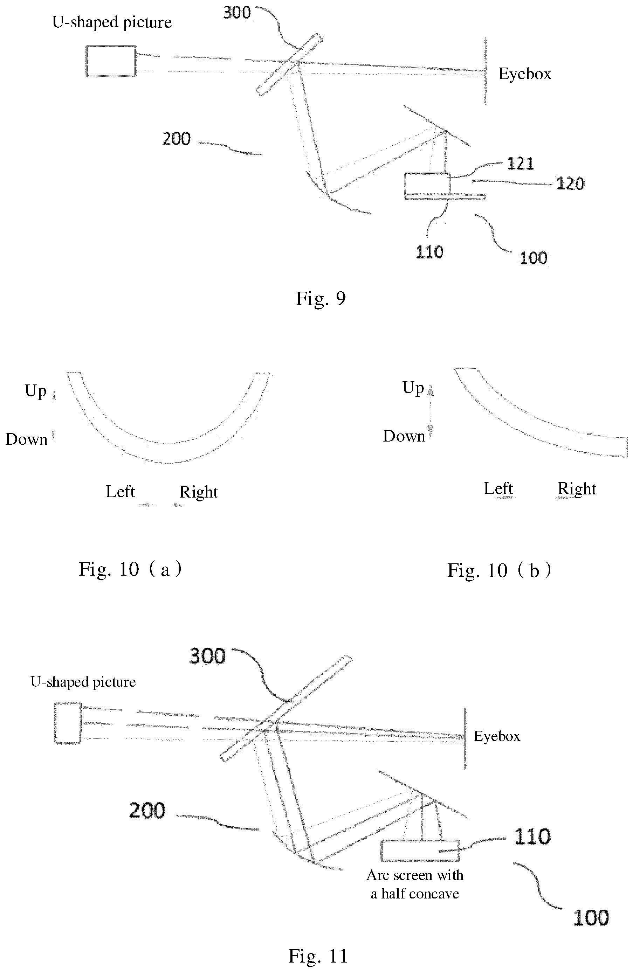

Fig. 7(a) shows a schematic structural diagram of a U-shaped glass brick according to some embodiments of the present application. Fig. 7(b) shows a schematic structural diagram of a U-shaped glass brick according to another embodiment of the present application. Fig. 8 shows a schematic structural diagram of a display apparatus according to another embodiment of the present application. Fig. 9 shows a schematic structural diagram of a display apparatus according to another embodiment of the present application.

When the imaged continuous virtual image includes at least one of the left virtual image portion (L) and the right virtual image portion (R) by providing the refracting member on the imaging path of the image source display, the entire continuous virtual image reflected from the virtual image imaged on the imaging window 300 to the human eyes can finally be a U-shaped virtual image, a dustpan-shaped virtual image or a virtual image with any other desired shape, by changing the selection of the refracting member 121.

In some embodiments, the optical path of light beams corresponding to the refracted light emitted from at least part of the light-exiting surface of the refracting member changes gradually in the refracting member.

For example, as shown in Fig. 7(a), Fig. 7(b), Fig. 8 and Fig. 9, the structure of the U-shaped glass brick can has a concave arc surface or half of the concave arc surface. The lower surface of the U-shaped glass brick is the surface of the refracting member 121 close to the image source (which can also be regarded as the light-incident surface of image light beams), and the upper surface of the U-shaped glass brick is the surface of the refracting member 121 away from the image source (which can also be regarded as the light-exiting surface of image light beams). In the left-right direction, the optical distance of the image light beams exiting from at least part of the region gradually changes in the process of being incident on the lower surface of the refracting member 121 and exiting from the upper surface of the refracting member 121, so that the virtual image distance (VID) from different positions in the formed virtual image to the eye gradually changes. For example, the optical distance first increases and then decreases. It can be understood here that the above description of the upward and downward directions is only for convenience of describing the accompanying drawings, and does not limit the actual structure of the display apparatus.

As shown in Fig. 9, a U-shaped refracting member (e.g., a U-shaped glass brick) is provided on part of the light-exiting light path of the image source, which will increase the optical path of this part of light beams, while the optical path of the part of light beams, not covered, of the image source remains unchanged. Therefore, the light beams passing through the refracting member finally form a U-shaped picture, while the light beams not passing through the refracting member form a vertical picture.

For example, the refracting member 121 includes a plurality of sub-refracting members which are stacked. For example, the materials of the plurality of sub-refracting members can be different, so as to have different refractive indices.

It can be understood that the optical distance of the image light beams emitted from the image source display 110 propagating to the magnifying assembly 200 refers to the product of the geometric distance, that the image light beams emitted from the corresponding image source display 110 propagating to the magnifying assembly 200, and the refractive index of the propagation medium. In the case where a refracting member is provided, the geometric path of the image light beams emitted from the image source display 110 propagating to the magnifying assembly 200 includes a part that passes through the refracting member 121 and a part that passes through the air, and the product of the part, that passes through the refracting member, of the geometric path of the image light beams and the refractive index of the refracting member being passed through, is the above-mentioned "additional optical distance".

Alternatively, the above-mentioned "additional optical distance" can also be defined as the product of the part, that passes through the refracting member, of the geometric path of the image light beams emitted from the image source in the process of propagating to the magnifying assembly 200, and the refractive index difference, which is obtained by subtracting the refractive index of air from the refractive index of the refracting member 121 being passed through.

In the above embodiments, for example, as shown in Fig. 7(a) and Fig. 7(b), the refractive index of the glass brick is changed through structural changes (the light-exiting surface is U-shaped). In other embodiments, the refractive index of the whole glass brick can be changed by changing the refractive index of the glass brick itself. That is, by changing the thickness and/or refractive index of the glass brick, the final U-shaped virtual image can be formed. For example, the thickness and/or refractive index of the refracting member 121 gradually changes along the direction perpendicular to the light-incident surface of the refracting member 121.

For example, the refracting member 121 has a cylindrical surface or a hyperbolic surface on the light-exiting side. In the case where the refracting member 121 is provided, the refracting member 121 can be attached to the image source display 110 or have a limited space with the image source display 110, and the position of the image source display 110 can be selected according to the usage requirements. For example, there will be a certain amount of light loss in the arrangement of being spaced apart, that is, part of the light beams will be reflected at the light-incident surface of the refracting member 121, thus causing waste.

Optionally, the distance between the light-incident surface of the refracting member 121 and the image source display 110 when they are spaced apart is not less than 10 mm. In some other embodiments, the distance between the light-incident surface of the special-shaped refracting member 121 and the image source assembly 110 when they are spaced apart is less than 10 mm.

For example, a fixing device, such as a buckle or a slot, can be provided on the side of the refracting member 121, so that the glass brick can be fixed and be prevented from moving. For example, the number of refracting members 121 is not limited to one, and for example, the refracting members 121 can form a plurality of independent continuous virtual images, or a plurality of continuous virtual images which are continuous, etc.

The arrangement positions of the image source display 110 and the refracting member 121 are independent of each other. For example, in the case where the refracting member 121 is configured as a U-shaped glass brick, the position of the image source display 110 can be flexibly set. For example, in Fig. 7(a), the image source display 110 is horizontally arranged, and it cooperates with the refracting member 121 to realize all/part of the U-shaped virtual image; the requirements for the installation angle of the image source can be reduced without adjusting the position of the image source display 110. In some other embodiments, the image source display 110 can be arranged at other angles (theoretically, it can be arranged at any angle). By adding a corresponding U-shaped glass brick, the required virtual image requirements can be realized, and this method can reduce the requirements for the installation angle of the image source display 110. It should be understood here that the U-shaped glass brick constituting the refracting member 121 can be a complete structure or a spliced structure of multiple glass bricks.

For example, the refracting member 121 is light-transmitting, and the refractive index of the refracting member 121 is different from the refractive index of air. For example, the refractive index of the refracting member 121 is greater than the refractive index of air (i.e., greater than 1), so that the optical path of the image light beams from the image source assembly 110 to the magnifying assembly 200 can be different, thereby achieving gradual zooming of at least part of the virtual image.

For example, the material of the refracting member 121 may be at least one of an inorganic material, an organic material and a composite material. For example, the inorganic material can include glass, quartz, etc.; the organic material can include, for example, a polymer material such as a resin material, etc.; and the composite material can include metal oxide doped polymethylmethacrylate, etc. The material of the refracting member 121 is not limited to the materials listed above, as long as it is light-transmitting and has a difference in refractive index with air.

For example, the light transmittance of the refracting member 121 to light is 60% to 100%. For example, the light transmittance of the refracting member 121 to light is 80% to 99%. For example, the light transmittance of the refracting member 121 to light is 90% to 99%.

For example, the refracting member 121 is provided on the light path of the image light beams emitted from the image source display 110 propagating to the magnifying assembly 200; in other words, the refracting member 121 can be located on the light path between the magnifying assembly 200 (curved mirror) and the image source (image source display 110). For example, the refracting member 121 is located on the light path of the image light beams emitted from the image source display 110 propagating to the magnifying assembly 200, but it is not limited to this case, and the refracting member 121 can also be located on the light path of the image light beams reflected by the magnifying assembly 200 propagating to the imaging window 300.

For example, the light-incident surface of the refracting member 121 can be attached to the display surface of the image source display 110 through transparent optical adhesive. For example, the light-incident surface of the refracting member 121 can be spaced apart from the display surface of the image source display 110. For example, the light-incident surface of the refracting member 121 and the display surface of the image source display 110 can be arranged in parallel and spaced apart.

In some embodiments, based on the display apparatus provided with the refracting member, the gap between the imaging position of the virtual image and the focus position of the user's line of sight is reduced by changing the imaging position of the virtual image, so as to improve the visual convergence conflict and improve the user experience. For example, it can prevent or reduce the user's fatigue, nausea and other adverse conditions, and improve the driving safety.

Fig. 10(a) shows a schematic structural diagram of a curved image source according to some embodiments of the present application. Fig. 10(b) shows a schematic structural diagram of a curved image source according to another embodiment of the present application. Fig. 11 show a schematic structural diagram of a display apparatus according to another embodiment of that present application.

In the display apparatus of the embodiment of the third aspect, the image source display 110 is configured to be a curved image source display 110, so that the image light beams generated by the image source display 110 are image light beams that can form a continuously transitional special-shaped image initially. By changing the selection of the curved image source display 110, the shape of the entire continuous virtual image reflected from the virtual image imaged on the imaging window 300 to the human eyes can be changed, so that the distances from at least some virtual images to the eyes are different and gradually change, and therefore, gradual zooming of the virtual image can be realized, and further, the final continuous virtual image thereof can be a U-shaped virtual image, a dustpan-shaped virtual image or a virtual image with any other desired shape.

Gradual zooming can be gradual zooming in one of a direction perpendicular to the ground and a direction parallel to the ground of the virtual image, or can be gradual zooming in a combination of the two directions.

Referring to Fig. 10(a), Fig. 10(b) and Fig. 11, the curved image source display 110 may be configured to have a concave arc surface or half of the concave arc surface, while in other embodiments, the curved image source display 110 can also be configured to have a convex arc surface or any other shape as needed.

For example, the curved image source display 110 can be configured to have a flat screen in one part and an arc screen in another part, the image light beams of the flat screen finally form a vertical virtual image after passing through the magnifying assembly 200, and the image light beams of the arc screen finally form a U-shaped virtual image after passing through the magnifying assembly 200. It can be understood here that the vertical picture can be considered to be vertical or nearly vertical, and can have a certain angular range of error. For example, the included angle between the picture and the ground is in the range of 80-100 degrees, which can be considered to form a vertical picture.

For example, a fixing device, such as a buckle or a slot, can be provided on the side of the curved image source display 110, so as to fix the curved image source display 110 and prevent it from moving.

For example, the number of curved image source displays 110 is not limited to one.

For example, the curved image source displays 110 cam form a plurality of independent U-shaped virtual images, or a plurality of U-shaped virtual images which are continuous, etc.

For example, the depth of field of the curved image source display 110 can be in the range of 0.5-1.5cm. Optionally, the depth of field is 1cm. It can be understood here that the depth of field is the difference between the point farthest from the human eyes and the point closest to the human eyes in the virtual image formed by the curved image source display 110.

For example, the curved image source display 110 includes at least one of a micron LED display apparatus, a millimeter LED display apparatus, a silicon-based liquid crystal display apparatus, a digital light processor, and a micro-electro-mechanical system (MEMS) display.

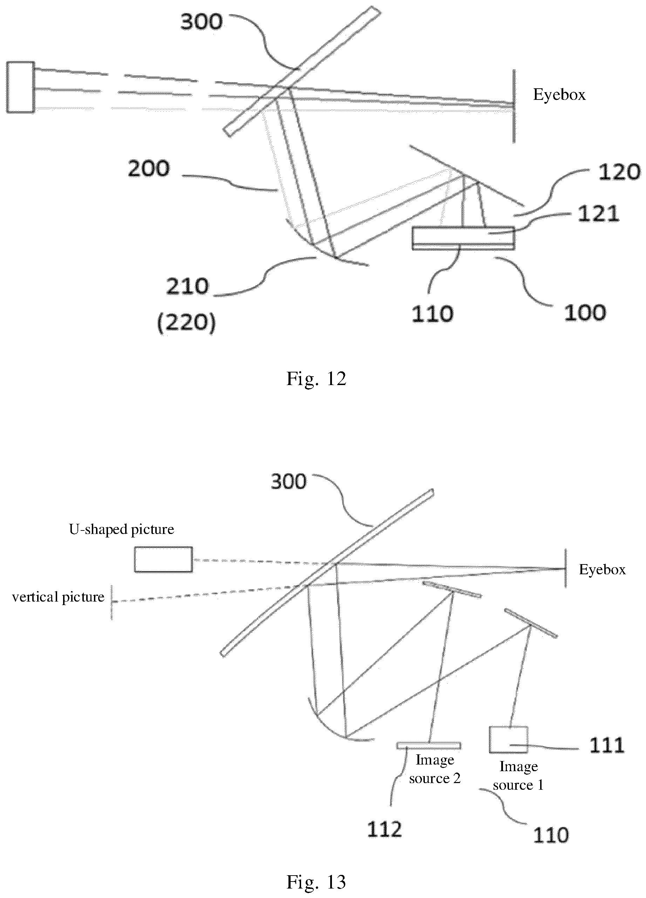

Fig. 12 shows a schematic structural diagram of a display apparatus according to another embodiment of the present application.

Referring to Fig. 12, the display apparatus includes an image source assembly (image emitting portion) 100 and a magnifying element 200. The magnifying element 200 includes a first reflecting member 210 and a second reflecting member 220.

As shown in Fig. 12, the first image light beams emitted from the image source assembly 100 are formed into second image light beams after passing through the first reflecting member 210 and the second reflecting member 220. For example, the second image light beams are reflected by the imaging window 300 and form a continuous virtual image in the eyebox region, and the continuous virtual image includes at least one of the left virtual image portion (L) and the right virtual image portion (R).

For example, according to the imaging requirements, the magnifying element 200 can further include a third reflecting member, a fourth reflecting member, etc. The number and arrangement manner of the reflecting members in the magnifying element 200 are not specifically limited in the present application.

For example, the first reflecting member 210 includes at least one of a planar mirror, a curved mirror, an aspherical mirror and a spherical mirror, the second reflecting member 220 is a curved mirror, and the curved mirror can be a concave mirror. In this case, the surface of the concave mirror close to the display region is a concave surface. The arrangement of the curved mirror can make the HUD have a longer imaging distance and a larger imaging size, and the curved mirror can also cooperate with a curved imaging window (mentioned later) such as a windshield, so as to eliminate the virtual image distortion caused by the imaging window.

For example, the curved mirror can be configured as a zoom curved mirror. In some examples, the zoom curved mirror is set before ex-factory, and the curvature thereof does not change during use. In some other examples, the curvature of the zoom curved mirror can be adjusted by electric field, so as to change the focal length of the curved mirror in real time and quickly during use.

For example, in the display apparatus of any embodiment of the first, second and third aspects, the image source display 110 or the curved image source display 110 can be a monochrome image source or a color image source (for example, an image source that can emit RGB mixed light beams), such as a light emitting diode (LED) display, or a liquid crystal display (LCD), etc.

For example, the image source display 110 or the curved image source display 110 can be a single image source, a dual image source or a multi-image source, such as a light emitting diode (LED) display, or a liquid crystal display (LCD), etc. The type of the image source display 110 or the curved image source display 110 is not limited by the present application.

For example, the image source display 110 or the curved image source display 110 can be configured as an imaging apparatus that emits a virtual image or a real image, such as a liquid crystal display (LCD), a light emitting diode (LED) display, an organic light emitting diode (OLED) display, a projection device, etc., or can also be configured as a virtual image or a real image formed by these imaging apparatuses.

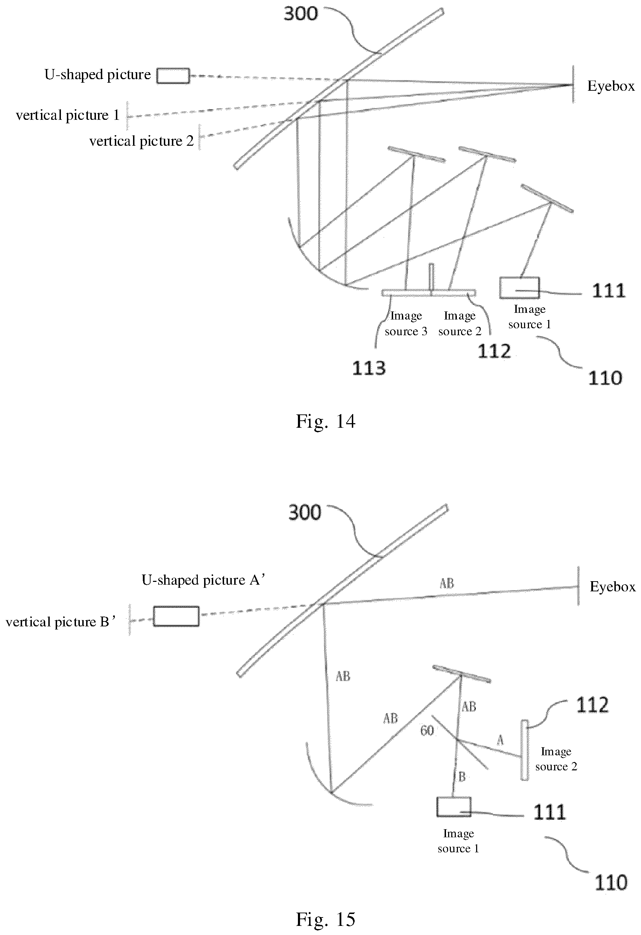

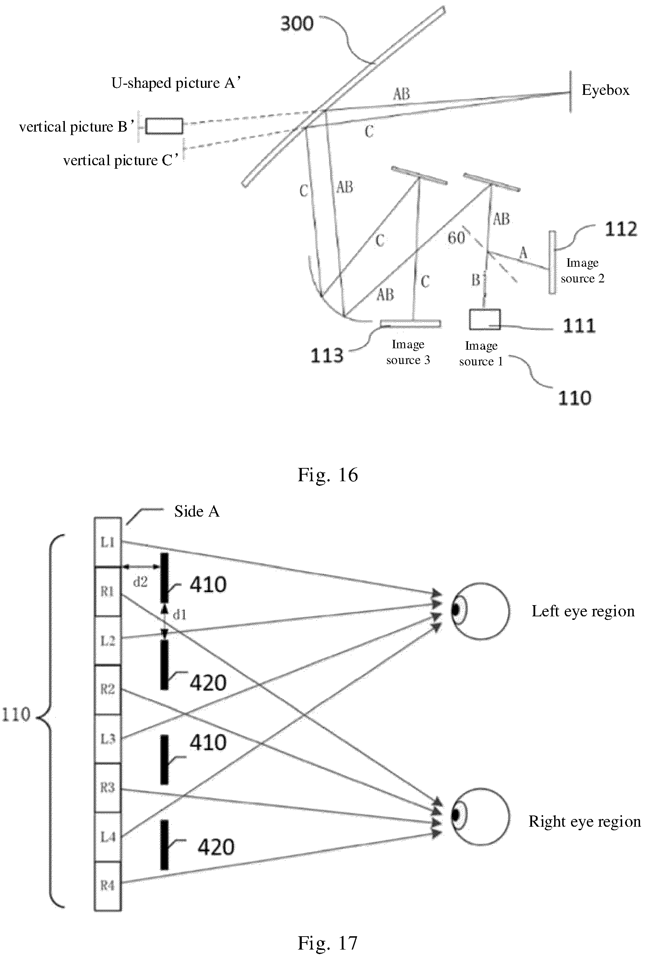

Fig. 13 shows a schematic structural diagram of a display apparatus according to another embodiment of the present application. Fig. 14 shows a schematic structural diagram of a display apparatus according to another embodiment of the present application. Fig. 15 shows a schematic structural diagram of a display apparatus according to another embodiment of the present application. Fig. 16 shows a schematic structural diagram of a display apparatus according to another embodiment of the present application.

In some embodiments, the display apparatus is configured to generate at least two virtual images at different times or at the same time, the at least two virtual images include a first virtual image and a second virtual image, and the first virtual image includes the left virtual image portion and/or the right virtual image portion.

For example, the distance from a proximal end of the first virtual image to the eyebox region of the display apparatus is less than the distance from a proximal end of the second virtual image to the eyebox region; the included angle between the first virtual image and a horizontal direction is greater than or equal to or less than 90 degrees, and the included angle between the second virtual image and the horizontal direction is greater than or equal to or less than 90 degrees.

For example, referring to Fig. 13- Fig. 16, the display apparatus of the embodiment of the fourth aspect is configured to generate at least two layers of virtual images with unequal distances from the user, the at least two layers of virtual images include a first virtual image, and the first virtual image includes a left virtual image portion and/or a right virtual image portion. The included angle between the first virtual image and the horizontal direction is greater than, equal to or less than 90 degrees.

For example, the at least two layers of virtual images further include a second virtual image, the distance from the proximal end of the first virtual image to the eyebox region of the display apparatus is less than the distance from the proximal end of the second virtual image to the eyebox region, and the included angle between the second virtual image and the horizontal direction is greater than, equal to or less than 90 degrees.

For example, the display apparatus is configured to generate at least one virtual image, and the at least one virtual image includes a naked-eye 3D virtual image, and the display apparatus is configured to enable the user to see the at least one naked-eye 3D virtual image through the at least one virtual image.

For example, the at least two virtual images further include a third virtual image, the third virtual image is a naked-eye 3D virtual image, and the display apparatus is configured to enable the user to see at least one naked-eye 3D virtual image through the at least one virtual image. For example, the third virtual image includes a left-eye virtual image and a right-eye virtual image, and the image source assembly included in the display apparatus is configured to emit left-eye light beams corresponding to the left-eye virtual image received by the left eye of a user and right-eye light beams corresponding to the right-eye virtual image received by the right eye of the same user, and the left-eye light enables the user to see the left-eye virtual image and the right-eye light enables the user to see the right-eye virtual image.

The left-eye virtual image region and the right-eye virtual image region are on the same imaging plane (that is, the imaging distance is basically equal), and the left-eye light beams and the right-eye light beams are emitted from the same image source, so that the left eye of the user can see the pattern in the left-eye virtual image region and the right eye of the user can see the pattern in the right-eye virtual image region. Due to the structure of human eyes and the visual processing principle of the brain, the user can see the 3D effect, which can also be called naked-eye 3D.

For example, as shown in Fig. 13, two layer of virtual images finally formed are a U-shaped virtual image and a vertical virtual image, the display apparatus includes two image source displays 110, the two image source displays 110 are an arc image source 111 and a planar image source 112. The light beams emitted from the arc image source 111 and the light beams emitted from the planar image source 112 form a U-shaped virtual image and a vertical virtual image, respectively.

For example, the two virtual images shown in Fig. 13 have different imaging distances, and the U-shaped virtual image is closer to the imaging window 300 than the vertical virtual image. In other embodiments which are not shown here, the U-shaped virtual image can also be configured to be farther away from the windshield than the vertical virtual image, so that the virtual image can be more easily fused with the objects in the surrounding environment, and the imaging fit can be improved. Of course, in other embodiments, the imaging distances of the U-shaped virtual image and the vertical virtual image can also be the same or partially the same.

For example, as shown in Fig. 14, the display apparatus includes three image source displays 110, the three image source displays 110 are respectively an arc image source 111, a planar image source 112 and a planar image source 113. The arc image source 111, the planar image source 112 and the planar image source 113 respectively form a U-shaped virtual image and two vertical virtual images. For example, the imaging distances of the three virtual images shown in the figure are different, and the U-shaped virtual image is provided between the two vertical virtual images. In some other examples, the U-shaped virtual image can be provided at the farthest end or the nearest end. In some other examples, the imaging distances of the three virtual images can also be the same, or partially the same. In addition, the types of image sources in the three image source displays 110 can be flexibly set according to needs, and are not limited to the setting state of the three image source displays 110 including the arc image source 111.

For example, the planar image source 112 and the planar image source 113 can be configured to be arranged side by side, or can be independent image source structures with different arrangement positions.

Further, the number of image sources included in the image source display 110 can be more, such as five, six, etc., which is not specifically limited in the present application here.

In addition, in some other embodiments, a curved surface with multiple U-shaped structures can be arranged on the arc image source 111. In some other embodiments, the image source display 110 is not limited to the case in which a specific number of image sources are arc screens; that is, in the case of multiple image sources, at least two image sources may be arc screens, so as to form a plurality of arc virtual images. Of course, in some other embodiments, a plurality of arc virtual images can also be realized through at least two U-shaped glass bricks.

For example, in some embodiments, the image source display 110 includes two arc image sources, namely a first arc image source and a second arc image source, and the light beams emitted from the first arc image source and the light beams emitted from the second arc image source respectively form two U-shaped virtual images. These two U-shaped virtual images can be set apart from each other with one in the distance and the other in the nearby, or they can be at least partially connected together in a transitional way. Further, there can be more arc image sources, and each arc image source forms a plurality of U-shaped virtual images respectively.

For example, as shown in Fig. 15, the image source display 110 includes an arc image source 111 and a planar image source 112, and a transflective element 60 is arranged on the light path of the arc image source 111 and the planar image source 112. The light beams A emitted from the arc image source 111 pass through the transflective element 60, and the light beams B emitted from the planar image source 112 are reflected after being incident on the transflective element 60, thus forming light beams AB; and the light beams A finally form a U-shaped virtual image A', the light beams B form a vertical virtual image B', and the inclined virtual image A' and the vertical virtual image B' are coaxially set.

Regarding coaxiality, the center lines of the U-shaped virtual image A' and the vertical virtual image B' are coincident or nearly coincident (the included angle between the center lines of them is within a set range, for example, the included angle is within 10 degrees), which means that the two virtual images are coaxial; furthermore, if the projection of the smaller virtual image in the direction of the larger virtual image falls within the range of the larger virtual image, they can also be called coaxial virtual images.

For example, as shown in Fig. 16, the image source display 110 includes an arc image source 111, a planar image source 112 and a planar image source 113. As shown in Fig. 16, a transflective element 60 is arranged on the light path of the arc image source 111 and the planar image source 112. The light beams A emitted from the arc image source 111 pass through the transflective element 60, and the light beams B emitted from the planar image source 112 are reflected after being incident on the transflective element 60, thus forming light beams AB; and the light beams A finally form a U-shaped virtual image A', the light beams B form a vertical virtual image B', and the inclined virtual image A' and the vertical virtual image B' are coaxially set. The vertical virtual image C' formed by the planar image source 113 is the same as or different from the U-shaped virtual image A' or the vertical virtual image B' in imaging distance. The coaxial display method can reduce the use of planar mirrors and optimize the spatial structure.

For example, a U-shaped refracting member (e.g., a U-shaped glass brick) is disposed on the light path of the image source display 110, and the U-shaped refracting member can add an optical path to the light beams passing through it. In this case, for this part of light beams, the equivalent object distance will change, and the imaging distance will also change accordingly, and finally the U-shaped virtual image will be realized. The arc screen can realize the U-shaped virtual image, and the glass brick can realize the U-shaped virtual image. In some embodiments, they can be combined.

For example, an arc screen can be combined with a U-shaped glass brick to form a U-shaped virtual image, or to form a spliced virtual image. For example, an arc screen and a U-shaped glass brick are used to form U-shaped virtual images with different imaging distances.

For example, at least one of the positions, sizes, inclination degrees and picture contents of the plurality of virtual images can be different.

Fig. 17 shows a schematic structural diagram of a display apparatus according to another embodiment of the present application.

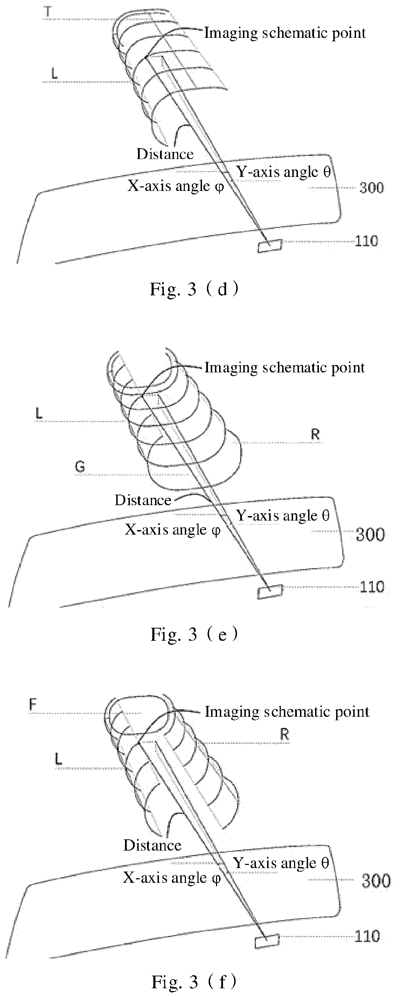

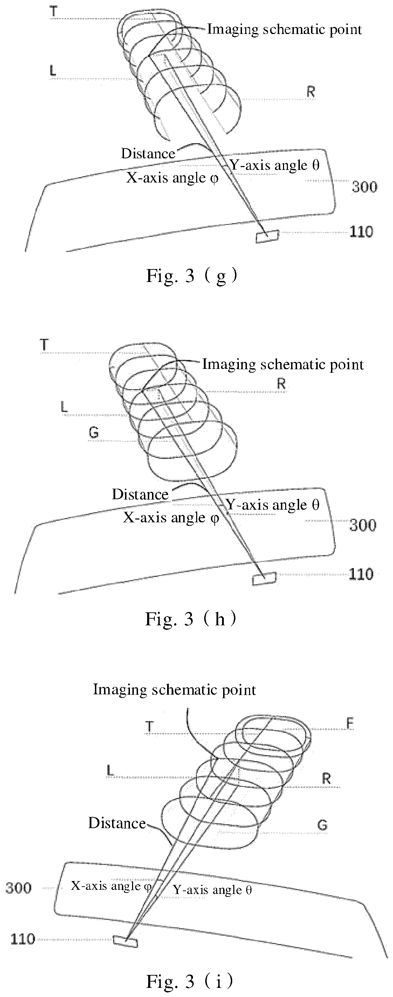

Referring to Fig. 17, naked-eye 3D imaging will be described. The image source display 110 of the display apparatus includes 8 columns of image source units, 2 first blocking units and 2 second blocking units, which are taken as an example for illustration. There is an interval d2 between the light barrier and the image source display 110, and both the first blocking unit 410 and the second blocking unit 420 can block light, so second light beams emitted from some image source units (such as R1, R2, R3 and R4 shown in Fig. 3) cannot reach the left eye region, and only first light beams emitted from the image source units L1, L2, L3 and L4 can be seen in the left eye region; similarly, only the second light beams emitted from the image source units R1, R2, R3 and R4 can be seen in the right eye region. The first blocking unit 410 allows first light beams to be emitted to a first designated region (e.g., the left eye region shown in Fig. 3), such as the first light beams emitted from the source units L1, L2, L3 and L4; and the second blocking unit 420 allows second light beams to be emitted to a second designated region (e.g., the right eye region shown in Fig. 3), such as the second light beams emitted from the image source units R1, R2, R3 and R4; thus, three-dimensional imaging can be achieved by separating the visible virtual images of the left eye and the right eye. For example, the sizes of the first blocking unit 410 and the second blocking unit 420 and the relative positions of the first blocking unit 410 and the second blocking unit 420 can be precisely calculated, so that imaging can be ensured at a specific position.

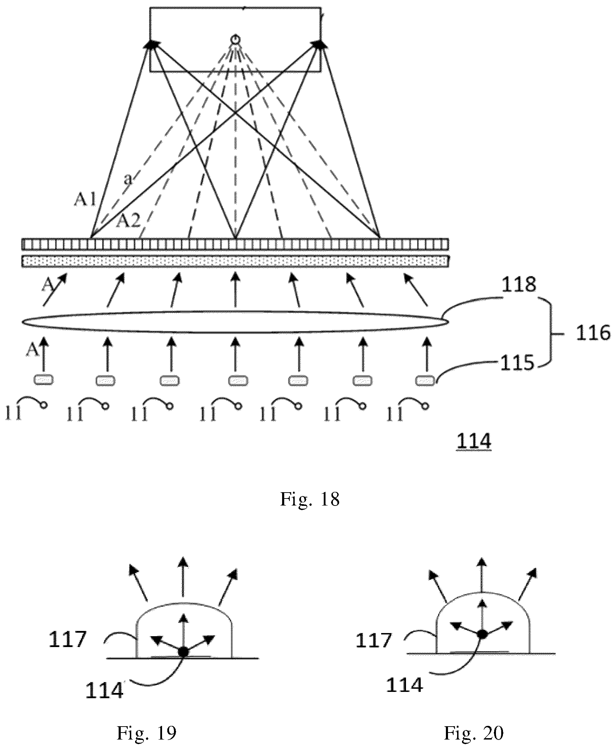

Fig. 18 shows a schematic structural diagram of a display apparatus according to another embodiment of the present application.

For example, when the display apparatus controls the orientation of the light beams emitted from the light source, it usually adopts an opaque shell arranged around the light source to control the orientation of the light beams emitted from the light source, such as a hollow reflective cup. However, controlling the orientation of light beams by using the opaque shell will lead to poor uniformity of virtual image, which cannot guarantee the image quality, and the opaque shell will also affect the heat dissipation of the light source.

The image source display 110 of the display apparatus of the present application includes a light source portion having a plurality of light sources 114 and a light-transmitting collimating portion 115, and light emitted from the plurality of light sources 114 passes through the light-transmitting collimating portion 115; and each of at least part of the plurality of light sources 114 is not provided with a reflective cup for reflecting the light emitted from the light source 114. And/or, at least a continuous gas medium layer is included between a light source layer where the plurality of light sources 114 are located and a collimating layer where the light-transmitting collimating portion 115 is located. It can be understood here that the image source display 110 includes a light source portion and a light-transmitting collimating portion 115, and the light source portion has a plurality of light sources 114.

For example, light emitted from the plurality of light sources 114 is directly incident on the light-transmitting collimating portion 115.

For example, as shown in Fig. 18- Fig. 20, the image source display 110 includes an orientation control module 116, the orientation control module 116 includes a light-transmitting collimating portion 115 and a plurality of transparent light-gathering portions 117, the light emitted from the light sources 114 corresponding to the plurality of transparent light-gathering portions 117 passes through the light-transmitting collimating portion 115 after passing through the plurality of transparent light-gathering portions 117, and at least a continuous gas medium layer is disposed in a region between the light-transmitting collimating portion 115 and the plurality of transparent light-gathering portions 117. Therefore, at least part of the light sources 114 may not be provided with reflective cups, which is beneficial to heat dissipation of the light sources 114.

For example, the gas medium layer is adjacent to the collimating layer and to the light source layer, and thus, the light emitted from the light sources 114 directly enters the collimating members after passing through the gas medium layer; or, the gas medium layer is adjacent to a light-gathering layer including the plurality of transparent light-gathering portions 117 and to the collimating layer, and thus, the light emitted from the light sources 114 directly enters the collimating members after passing through the transparent light-gathering portions 117 and the gas medium layer.

For example, the gas medium layer can be air or any other gas.

For example, the center of the collimating member is collinear with the center of a corresponding light source 114.

For example, the collimating member is a convex lens or a Fresnel lens, and the collimating member can reduce the divergence angle of light beams passing through it.

For example, the light emitted from the plurality of transparent light-gathering portions 117 is directly incident on the light-transmitting collimating portion 115.

For example, the plurality of transparent light-gathering portions 117 are provided with grooves for receiving corresponding light sources 114.

For example, the plurality of transparent light-gathering portions 117 are attached to the corresponding light sources 114.

For example, the light-exiting surfaces of the plurality of transparent light-gathering portions 117 are convex surfaces protruding in the direction away from the corresponding light sources 114.

For example, at least one of the plurality of transparent light-gathering portions 117 is a plano-convex lens.

For example, as shown in Fig. 19 and Fig. 20, the light-exiting surface of the transparent light-gathering portion 117 at least includes a first light-exiting curved surface, and the light source 114 can be arranged at the focus of the first light-exiting curved surface of the transparent light-gathering portion 117. The light source 114 can be disposed at the inner side of the transparent light-gathering portion 117.

For example, the light source 114 is embedded in the transparent light-gathering portion 117 and located in the middle of the lower surface of the transparent light-gathering portion 117. The transparent light-gathering portion 117 can be a plano-convex lens having a planar surface and a convex surface.

In some embodiments, on the basis of any one of any embodiment of the first to fourth aspects, the light-exiting surfaces of the transparent light-gathering portions 117 are convex paraboloids, and the light sources 114 are embedded in the transparent light-gathering portions 117 and located at the focuses of the paraboloids; or, the light-exiting surfaces of the transparent light-gathering portions 117 are convex arc surfaces, and the light sources 114 are embedded in the transparent light-gathering portions 117 and located at the focuses of the arc surfaces; or, the light-exiting surfaces of the transparent light-gathering portions 117 include a first light-exiting curved surface and a second light-exiting side surface, the first light-exiting curved surface is a convex paraboloid, and the light sources 114 are embedded in the transparent light-gathering portions and located at the focuses of the paraboloids; or, the light-exiting surfaces of the transparent light-gathering portions 117 include a first light-exiting curved surface and a second light-exiting side surface, the first light-exiting curved surface is a convex arc surface, and the light sources 114 are embedded in the transparent light-gathering portions and located at the focuses of the arc surfaces.

For example, the lower surface of the transparent light-gathering portion 117 is a planar surface attached to a substrate, and the upper surface of the transparent light-gathering portion 117 is a convex surface along the light-exiting direction of the light source 114. The transparent light-gathering portion 117 is located in the light-exiting direction of the light source 114. The transparent light-gathering portion 117 is configured to converge the light beams emitted from the light source 114 to obtain first converged light beams, and exit the first converged light beams to the light-transmitting collimating portion 115, and the light-transmitting collimating portion 115 is configured to further converge the incident first converged light beams to obtain second converged light beams, and exit the second converged light beams to the light-converging portion 118. The light beams emitted from the light source 114 are converged by the transparent light-gathering portion 117 and the light-transmitting collimating portion 115, so that the utilization rate of the light beams emitted from the light source can be further improved.

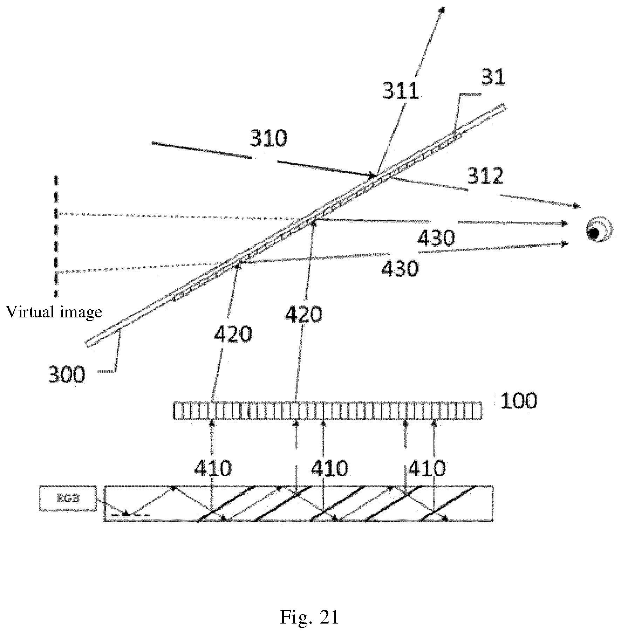

Fig. 21 shows a schematic structural diagram of a display apparatus according to another embodiment of the present application.

For example, the image source assembly 100 generally uses light in a target waveband to perform imaging, and the target waveband includes at least one spectral band; for example, the image source assembly 100 can use light in three color bands of RGB (red, green, and blue) to realize imaging. In the case where the image source assembly 100 includes a liquid crystal panel, the image source assembly 100 can emit light with a specific polarization characteristic, such as light with a second polarization characteristic; moreover, a transflective film 31 can reflect the light with the second polarization characteristic in the target waveband. The transflective film 31 has high reflectivity for the light with the second polarization characteristic in at least one spectral band, and has high transmittance for other light, such as the light with the first polarization characteristic in the target waveband and other light (including the light with the first polarization characteristic and the light with the second polarization characteristic) which is not in the target waveband. The transflective film 31 can reflect the majority of the light emitted from the image source assembly 100 to the observation region, and the majority of the external ambient light can also enter the observation region. For example, the light with the first polarization characteristic in the majority of the waveband can pass through the transflective film 31 and reach the observation region, so that users can normally view external things.

For example, the target waveband includes at least one spectral band; for example, the FWHM (full width at half maximum) of the at least one spectral band can be less than or equal to 60nm.

For example, as shown in Fig. 21, if the light with the first polarization characteristic is light in P polarization state (hereinafter referred to as P-polarized light) and the light with the second polarization characteristic is light in S polarization state (hereinafter referred to as S-polarized light), the light guide apparatus can emit light 410 to the image source assembly 100, and the light 410 is P-polarized light; in the case where the light emitted from the image source module 100 is RGB light, the light 410 is P-polarized light of of RGB. The image source assembly 100 can convert the light 410 into light 420, the light 420 is imaging light, the imaging light is S-polarized light of RGB, and the transflective film 31 can reflect the S-polarized light of RGB and transmit other light. For example, the transflective film 31 has a high reflectivity (for example, the reflectivity is about 70% to 90%) for red light, green light and blue light in S polarization state, and has a high transmittance (for example, the transmittance is about 70% to 90%) for light in other waveband and red light, green light and blue light in P polarization state.

As shown in Fig. 21, if the image source assembly 100 emits RGB light 420 in S polarization state, the transflective film 31 has a high reflectivity for the light 420, and therefore, the majority of the light 420 emitted from the image source assembly 100 can be reflected by the transflective film 31 into light 430, and the light 430 is reflected to the observation region, thus improving the imaging brightness. Moreover, the majority of the external ambient light 310 can be transmitted normally, which will not affect the observation of the external environment. For example, there are things in the external environment that mainly emit light in the target waveband, such as traffic lights emitting red light and green light, etc. The waveband of the light generated by traffic lights or similar devices is close to or coincident with the target waveband such as RGB. Part of light 311 with the second polarization characteristic (e.g., S polarization state) in the light emitted from traffic lights is reflected by the transflective film 31, but another part of light 312 with the first polarization characteristic (e.g., P polarization state) in the light emitted from traffic lights can still pass through the reflective film 31 with high transmittance, and the user in the observation region can still normally view the light emitted from traffic lights or the like. For example, the light 312 can further include light in the waveband other than the RGB waveband.

The first polarization characteristic can also be S polarization state, or other polarization states such as circular polarization and elliptical polarization, etc., which is not limited by the present embodiment; and, the RGB mentioned above are abbreviations for red light, green light and blue light, respectively; for example, they can be red light, green light and blue light distributed in a continuous waveband, or they can be red light, green light and blue light distributed discontinuously. For example, the FWHM of the wavelength of the above light is not greater than 60 nm, the peak wavelength position of blue light can be in the range of 410 nm to 480 nm, the peak wavelength position of green light can be in the range of 500 nm to 565 nm, and the peak wavelength position of red light can be in the range of 590 nm to 690 nm.

For example, the distance between the virtual image and the observation region is in the range of 2-20 m. It can be understood here that the coverage of the display content of the virtual image can be within the range of 2-20 m from the observation region. For example, the coverage of the display content of the virtual image can be in the range of more than or equal to 2 meters and less than or equal to 6 meters from the observation region. For example, the coverage of the display content of the virtual image can be in the range of more than or equal to 2 meters and less than or equal to 5 meters. For example, the coverage of the display content of the virtual image can be in the range of more than or equal to 2 meters and less than or equal to 4 meters; and/or, the coverage of the display content of the virtual image can be in the range of more than or equal to 10 meters and less than or equal to 20 meters from the observation region. For example, the coverage of the display content of the virtual image can be in the range of more than or equal to 12 meters and less than or equal to 20 meters. For example, the coverage of the display content of the virtual image can be in the range of more than or equal to 14 meters and less than or equal to 20 meters. For example, the observation region can be a certain region where the user's eyes are located, such as a region where the user's eyes are located and the image displayed by the display apparatus can be viewed, and can be, for example, a planar region or a three-dimensional region.

The embodiments of the present application have been described and explained in detail above. It can be clearly understood that the present application describes how particular examples are formed and used, but the present application is not limited to any detail of these examples. Instead, these principles can be applied to many other embodiments based on the teachings of the contents disclosed herein.

At last, it should be noted that the above embodiments are merely exemplary embodiments of the present disclosure, and are not intended to limit the present disclosure. Although the present disclosure has been described in detail with reference to the aforementioned embodiments, it is still possible for those skilled in the art to modify the technical solutions described in the aforementioned embodiments or equivalently replace some of the technical features. Any modification, equivalent substitution, improvement, etc., made within the spirit and principle of the present disclosure shall be included in the scope of protection of the present disclosure.

## Claims

1. A display apparatus, wherein the display apparatus is configured to enable a user to observe a virtual image through an eyebox region of the display apparatus, and
the virtual image at least comprises a left virtual image portion and/or a right virtual image portion.

2. A display apparatus, wherein the display apparatus is configured to enable a user to observe a virtual image through an eyebox region of the display apparatus, the virtual image at least comprises a first virtual image portion and a second virtual image portion with intersected image surface extension directions, and the first virtual image portion and the second virtual image portion are connected.

3. A display apparatus, wherein the display apparatus is configured to enable a user to observe a virtual image through an eyebox region of the display apparatus, the virtual image at least comprises a first virtual image portion and a second virtual image portion with intersected image surface extension directions, and light beams for forming the first virtual image portion and light beams for forming the second virtual image portion come from a same image source display comprised in the display apparatus.

4. The display apparatus according to any one of claims 1-3, wherein
the virtual image is a continuous virtual image, or the virtual image comprises a plurality of virtual image portions with intersected image surface extension directions, at least part of adjacent virtual image portions being connected; and/or,
the display apparatus comprises an image source assembly having an image source display, the image source display comprises a first display region and a second display region, image light beams emitted from the first display region correspond to the left virtual image portion and/or the right virtual image portion, and image light beams emitted from the second display region correspond to a remaining portion of the virtual image.

5. The display apparatus according to any one of claims 1-4, wherein the display apparatus comprises an image source assembly having an image source display, wherein
the image source display is a curved image source display; and/or,
the image source assembly further comprises a refracting member configured to refract image light beams emitted from the image source display and incident on the refracting member.

6. The display apparatus according to claim 5, wherein
in a case where the image source display is the curved image source display, a surface type of the curved image source display matches an image surface shape of at least part of the virtual image;
in a case where the image source assembly comprises the refracting member, a surface shape of at least part of a light-exiting surface of the refracting member matches the image surface shape of at least part of the virtual image.

7. The display apparatus according to claim 5, wherein corresponding positions of image light beams incident on a same contour line of the refracting member on the virtual image are on a same circumference of a polar coordinate system, a set reference point being taken as an origin of the polar coordinate system.

8. The display apparatus according to any one of claims 1-7, wherein
the display apparatus further comprises a magnifying assembly, and the magnifying assembly comprises one or more of a curved reflective mirror, a convex lens, a diffractive waveguide, a geometric waveguide, and an HOE windshield.

9. The display apparatus according to claim 8, wherein
the magnifying assembly comprises a zoom curved mirror, and a surface shape of the zoom curved mirror matches an image surface shape of at least part of the virtual image.

10. The display apparatus according to any one of claims 1-9, wherein
a picture displayed by the left virtual image portion comprises information related to a left external point of interest located on a left side of a travel route; and/or,
a picture displayed by the right virtual image portion comprises information related to a right external point of interest located on a right side of the travel route.

11. The display apparatus according to any one of claims 1-10, wherein
a virtual image part corresponding to a position with larger polar coordinate angle among different positions of the virtual image is closer to the eyebox region; and/or,
a virtual image part corresponding to a position with a larger downward viewing angle or upward viewing angle among different positions of the virtual image is closer to the eyebox region.

12. The display apparatus according to any one of claims 1-11, wherein a connection portion of at least part of virtual image portions in the virtual image has a right-angle corner or rounded corner.

13. The display apparatus according to any one of claims 1-12, wherein an image surface shape of the left virtual image portion and/or the right virtual image portion is curved.

14. The display apparatus according to any one of claims 1-13, wherein
the virtual image at least comprises a U-shaped virtual image portion with a U-shaped cross section, the U-shaped virtual image portion comprises the left virtual image portion and the right virtual image portion, and the U-shaped virtual image portion further comprises one of a front lower sub-virtual image portion, a front sub-virtual image portion, and a front upper sub-virtual image portion; and/or,
the virtual image at least comprises an L-shaped virtual image portion with an L-shaped cross section, the L-shaped virtual image portion comprises the left virtual image portion or the right virtual image portion, and the L-shaped virtual image portion further comprises one of a front lower sub-virtual image portion, a front sub-virtual image portion and a front upper sub-virtual image portion.

15. The display apparatus according to any one of claims 1-14, wherein
the left virtual image portion and/or the right virtual image portion are perpendicular to or inclined to a ground; or,
the virtual image further comprises a front sub-virtual image portion, the front sub-virtual image portion comprises one or more of a front lower sub-virtual image portion, a front sub-virtual image portion and a front upper sub-virtual image portion, wherein one or more of the left virtual image portion, the right virtual image portion, the front lower sub-virtual image portion, the front sub-virtual image portion and the front upper sub-virtual image portion are perpendicular to or inclined to the ground, or the front lower sub-virtual image portion is tiled onto or parallel to the ground.

16. The display apparatus according to any one of claims 1-15, wherein the virtual image further comprises a front sub-virtual image portion, the front sub-virtual image portion comprises one or more of a front lower sub-virtual image portion, a front sub-virtual image portion and a front upper sub-virtual image portion,
wherein adjacent sub-virtual image portions in the front sub-virtual image portion are not connected, or any adjacent sub-virtual image portions in the front sub-virtual image portion are connected, or some adjacent sub-virtual image portions in the front sub-virtual image portion are connected, and/or the left virtual image portion is connected with at least part of sub-virtual image portions adjacent thereto, and/or the right virtual image portion is connected with at least part of sub-virtual image portions adjacent thereto.

17. The display apparatus according to any one of claims 1, 4-7 and 9, wherein
the display apparatus is configured to generate at least two virtual images at different times or at the same time, the at least two virtual images comprise a first virtual image and a second virtual image, and the first virtual image comprises the left virtual image portion and/or the right virtual image portion.

18. The display apparatus according to claim 17, wherein a distance from a proximal end of the first virtual image to the eyebox region of the display apparatus is less than a distance from a proximal end of the second virtual image to the eyebox region;
an included angle between the first virtual image and a horizontal direction is greater than or equal to or less than 90 degrees, and an included angle between the second virtual image and the horizontal direction is greater than or equal to or less than 90 degrees.

19. The display apparatus according to any one of claims 1-18, wherein
the display apparatus is configured to generate at least one virtual image, the at least one virtual image comprises a naked-eye 3D virtual image, and the display apparatus is configured to enable the user to see at least one naked-eye 3D virtual image through the at least one virtual image.

20. The display apparatus according to any one of claims 4-7, wherein
the image source assembly of the display apparatus comprises a light source portion having a plurality of light sources and a light-transmitting collimating portion, light emitted from the plurality of light sources passes through the light-transmitting collimating portion,
wherein each of at least part of the plurality of light sources is not provided with a reflective cup for reflecting the light emitted from the light sources, and/or, at least a continuous gas medium layer is comprised between a light source layer where the plurality of light sources are located and a collimating layer where the light-transmitting collimating portion is located.

21. The display apparatus according to claim 20, wherein
the light emitted from the light sources is directly incident on the light-transmitting collimating portion; or
the image source assembly comprises an orientation control module, the orientation control module comprises the light-transmitting collimating portion and a plurality of transparent light-gathering portions, the light emitted from the light sources corresponding to the plurality of transparent light-gathering portions passes through the light-transmitting collimating portion after passing through the plurality of transparent light-gathering portions, and at least a continuous gas medium layer is disposed in a region between the light-transmitting collimating portion and the plurality of transparent light-gathering portions.

22. The display apparatus according to claim 21, wherein
light emitted from the plurality of transparent light-gathering portions is directly incident on the light-transmitting collimating portion; and/or,
the plurality of transparent light-gathering portions are provided with grooves for receiving corresponding light sources; and/or,
the plurality of transparent light-gathering portions are attached to the corresponding light sources; and/or,
light-exiting surfaces of the plurality of transparent light-gathering portions are convex surfaces protruding in a direction away from the corresponding light sources; and/or,
at least one of the plurality of transparent light-gathering portions is a plano-convex lens.

23. The display apparatus according to claim 21 or 22, wherein
light-exiting surfaces of the plurality of transparent light-gathering portions are convex paraboloids, and the light sources are embedded in the plurality of transparent light-gathering portions and located at focuses of the paraboloids; or
light-exiting surfaces of the plurality of transparent light-gathering portions are convex arc surfaces, and the light sources are embedded in the plurality of transparent light-gathering portions and located at focuses of the arc surfaces; or,
light-exiting surfaces of the plurality of transparent light-gathering portions comprise a first light-exiting curved surface and a second light-exiting side surface, the first light-exiting curved surface is a convex paraboloid, and the light sources are embedded in the plurality of transparent light-gathering portions and located at focuses of paraboloids; or,
light-exiting surfaces of the transparent light-gathering portions comprise a first light-exiting curved surface and a second light-exiting side surface, the first light-exiting curved surface is a convex arc surface, and the light sources are embedded in the plurality of transparent light-gathering portions and located at focuses of arc surfaces.

24. The display apparatus according to any one of claims 1-4, further comprising:
an image source assembly, wherein the image source assembly is configured to emit image light beams;
a refracting member, configured to refract incident image light beams to obtain refracted light beams; and
a magnifying assembly, configured to magnify incident refracted light beams to obtain magnified light beams for forming at least part of the virtual image.

25. The display apparatus according to claim 24, wherein the refracting member comprises one or a plurality of sub-refracting members, and/or at least part of a light-exiting surface of the refracting member comprises a curved surface and/or a plane surface.

26. The display apparatus according to claim 24 or 25, wherein
an optical path of light beams corresponding to the refracted light emitted from at least part of the light-exiting surface of the refracting member changes gradually in the refracting member.

27. The display apparatus according to claim 24 or 25, wherein
a thickness and/or refractive index of the refractive element changes gradually in a direction perpendicular to a light-incident surface of the refractive element.

28. The display apparatus according to claim 24 or 25, wherein
a light-incident surface of the refracting member is attached to or spaced apart from the image source, and a distance between the light-incident surface of the refracting member and the image source when being spaced apart is not less than 10 mm.

29. The display apparatus according to any one of claims 1-3, further comprising:
an image source assembly, comprising a curved image source display, wherein the image source display is configured to emit image light beams;
a magnifying assembly, configured to magnify incident image light beams to obtain magnified light beams for forming at least part of the virtual image.

30. The display apparatus according to claim 29, wherein at least part of a light-exiting surface of the curved image source is curved.

31. The display apparatus according to claim 29, wherein a light-exiting surface of the curved image source is an arc surface, and a depth of field of the curved image source is in a range of 0.5-1.5 cm.

32. The display apparatus according to claim 29, wherein the curved image source comprises at least one of a micron LED display apparatus, a millimeter LED display apparatus, a silicon-based liquid crystal display apparatus, a digital light processor and a micro-electro-mechanical system display.

33. The display apparatus according to any one of claims 1-3, wherein a distance between the virtual image and an observation region is in a range of 2-20 m.

34. An image source apparatus, wherein the image source apparatus is an image source apparatus applied to the display apparatus according to any one of claims 24-28, and the image source apparatus comprises the image source assembly and the refracting member;
or, the image source apparatus is an image source apparatus applied to the display apparatus according to any one of claims 29-33, and the image source apparatus comprises the curved image source display.

35. The display apparatus according to any one of claims 1-33, wherein the display apparatus is a head-up display apparatus, the display apparatus comprises an imaging window, and the imaging window is configured to reflect incident light beams to the eyebox region.

36. A traffic device, comprising the display apparatus according to any one of claims 1-33.

37. A display method, comprising:
projecting imaging light beams to an imaging window of a display apparatus, so that a user can observe a virtual image in a field of vision through an eyebox region of the display apparatus,
wherein the virtual image at least comprises a left virtual image portion and/or a right virtual image portion; and/or, the virtual image at least comprises a first virtual image portion and a second virtual image portion with intersected image surface extension directions, and the first virtual image portion and the second virtual image portion are connected.
